(19) Europäisches Patentamt
European Patent Office
Office européen des brevets

(11) **EP 2 743 861 B1**

(12) **EUROPEAN PATENT SPECIFICATION**

(45) Date of publication and mention
of the grant of the patent:
**06.02.2019 Bulletin 2019/06**

(21) Application number: **13195549.4**

(22) Date of filing: **03.12.2013**

(51) Int Cl.:
**G06K 9/00** *(2006.01)*   **G06T 7/00** *(2017.01)*

(54) **Method and device for detecting continuous object in disparity direction based on disparity map**

Verfahren und Vorrichtung zur Erkennung eines durchgehenden Objekts in Disparitätsrichtungen basierend auf Disparitätskarte

Procédé et dispositif de détection d'objet en continu dans un sens de disparité basé sur une carte de disparité

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2012 CN 201210535689**

(43) Date of publication of application:
**18.06.2014 Bulletin 2014/25**

(73) Proprietor: **Ricoh Company, Ltd.**
**Tokyo 143-8555 (JP)**

(72) Inventors:
• **Liu, Dianchao**
**Beijing 100044 (CN)**
• **Liu, Yuan**
**Beijing 100044 (CN)**
• **Hu, Ping**
**Beijing 100044 (CN)**
• **Shi, Zhongchao**
**Beijing 100044 (CN)**
• **Lu, Yaojie**
**Beijing 100044 (CN)**

(74) Representative: **Watkin, Timothy Lawrence Harvey et al**
**Marks & Clerk LLP**
**Fletcher House**
**The Oxford Science Park**
**Heatley Road**
**Oxford OX4 4GE (GB)**

(56) References cited:
**US-A1- 2011 311 108**

• **DAVID PFEIFFER ET AL: "Efficient representation of traffic scenes by means of dynamic stixels", INTELLIGENT VEHICLES SYMPOSIUM (IV), 2010 IEEE, IEEE, PISCATAWAY, NJ, USA, 21 June 2010 (2010-06-21), pages 217-224, XP031732275, ISBN: 978-1-4244-7866-8**
• **DAVID PFEIFFER ET AL: "Towards a Global Optimal Multi-Layer Stixel Representation of Dense 3D Data", PROCEDINGS OF THE BRITISH MACHINE VISION CONFERENCE 2011, 29 August 2011 (2011-08-29), pages 51.1-51.12, XP055060913, DOI: 10.5244/C.25.51 ISBN: 978-1-90-172543-8**
• **HERN PRG A!N BADINO ET AL: "The Stixel World - A Compact Medium Level Representation of the 3D-World", 9 September 2009 (2009-09-09), PATTERN RECOGNITION : 31ST DAGM SYMPOSIUM, JENA, GERMANY, SEPTEMBER 9-11, 2009 ; PROCEEDINGS; [LECTURE NOTES IN COMPUTER SCIENCE ; 5748], SPRINGER BERLIN HEIDELBERG, BERLIN, HEIDELBERG, PAGE(S) 51 - 60, XP019127048, ISBN: 978-3-642-03797-9 * the whole document ***
• **MARKUS ENZWEILER ET AL: "Efficient Stixel-based object recognition", INTELLIGENT VEHICLES SYMPOSIUM (IV), 2012 IEEE, IEEE, 3 June 2012 (2012-06-03), pages 1066-1071, XP032452928, DOI: 10.1109/IVS.2012.6232137 ISBN: 978-1-4673-2119-8**

EP 2 743 861 B1

## Description

BACKGROUND OF THE INVENTION

1. Field of the Invention

The present invention relates to the field of image processing, and more particularly relates to a method and a device for detecting a continuous road dividing object in a disparity direction on the basis of a disparity map.

2. Description of the Related Art

For example, a driver assistance system has been widely used. In the driver assistance system, it is very important to detect an object in a road scene. An example of the object in the road scene may be a road shoulder, a white line, a fence, a vehicle, a passerby, a building, a tree, etc.

As for the object detection in the road scene, according to types of images to be processed, the conventional detection methods are mainly divided into two kinds, namely, a detection method on the basis of a grayscale image (a first kind of detection method) and a detection method on the basis of a disparity map (a second kind of detection method).

In the detection method on the basis of the grayscale image (the first kind of detection method), an object is detected on the basis of edges, color, texture, or other grayscale image features in the grayscale image. Sometimes a sensor may be utilized to obtain information of the object, and the object detection is carried out by further considering the obtained information of the object.

For example, in non-patent reference No. 1 (Giancarlo Alessandretti, Alberto Broggi, and Pietro Cerri; Vehicle and Guard Rail Detection Using Radar and Vision Data Fusion; IEEE 2007 Transactions on Intelligent Transportation Systems), a method of detecting a vehicle and a fence on the basis of combination of laser imaging and vision imaging is proposed. In this method, a laser is used to locate a region of interest, and then a grayscale image is utilized to perform the detection.

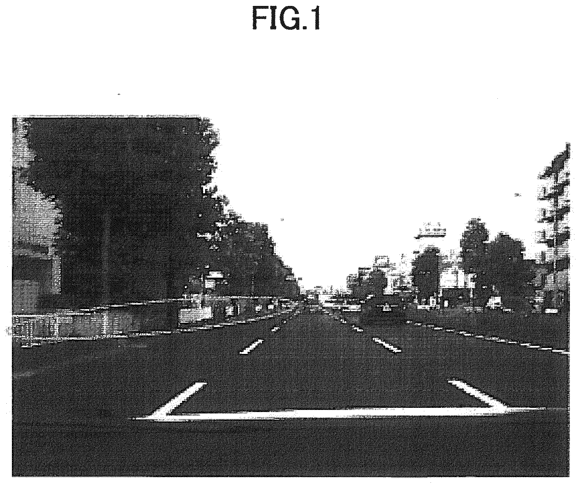

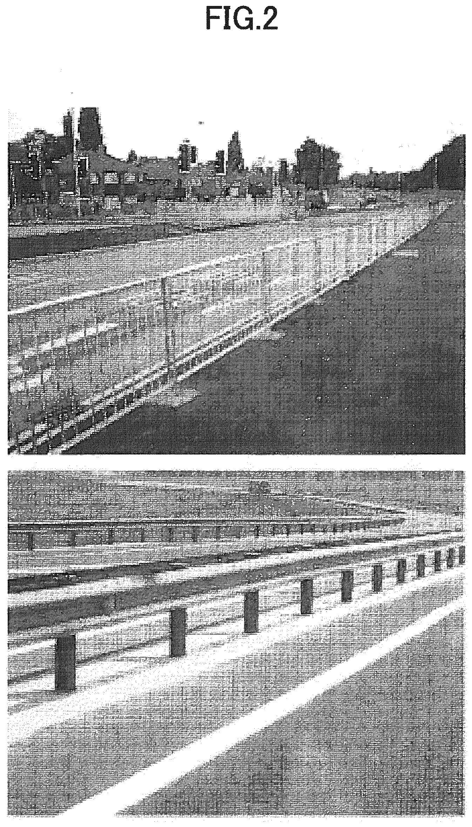

However, the detection method on the basis of the grayscale image is easily influenced by environmental conditions such as the intensity of illumination and the change of color as well as visual geometric deformation. As a result, this detection method is not stable in actual use. For example, FIG. 1 illustrates an example of a grayscale image including a fence part which is marked by an ellipse. FIG. 2 illustrates examples of different grayscale images on the basis of different illumination conditions, backgrounds, visual geometric deformations, etc. According to FIGS. 1 and 2, it is obvious that a grayscale image is easily influenced by the environmental conditions and the visual geometric deformation. Consequently, the detection result is easily influenced too.

In addition, in the detection method on the basis of the disparity map (the second kind of detection method), an object is detected by utilizing the disparity map captured by a stereo camera.

For example, in non-patent reference No. 2 (Zhencheng Hu, Francisco Lamosa, and Keiichi Uchimura; A Complete U-V-Disparity Study for Stereovision Based on 3D Driving Environment Analysis; Proceedings of the Fifth International Conference on 3D Digital Imaging and Modeling 2005), a method of dividing an object on the basis of a U-disparity image and a V-disparity image is proposed. In this method, first the U-disparity image and the V-disparity image are calculated; second line detection is carried out in the U-disparity image and the V-disparity image, and the detected line segments are considered as the candidate surfaces of the object; finally the corresponding line segments having a same disparity value (Hereinafter, a disparity value is also called a "disparity".) in the U-disparity image and the V-disparity image are determined as belonging to the same object. In this way, the division of the object is achieved.

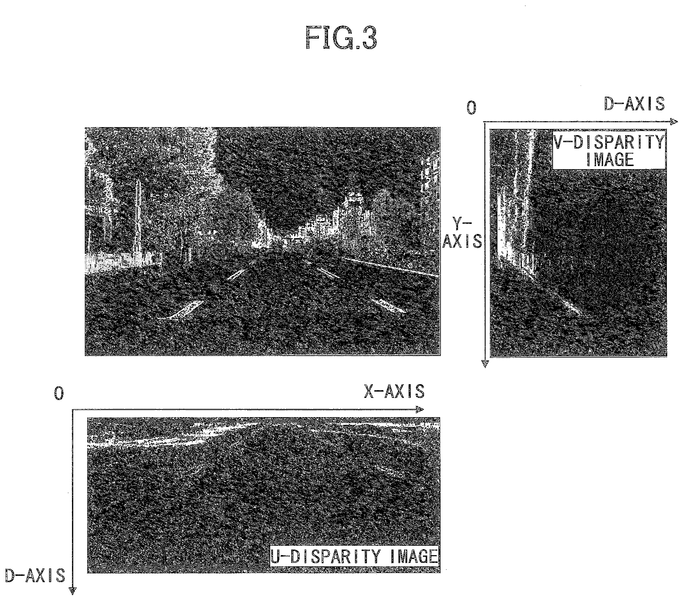

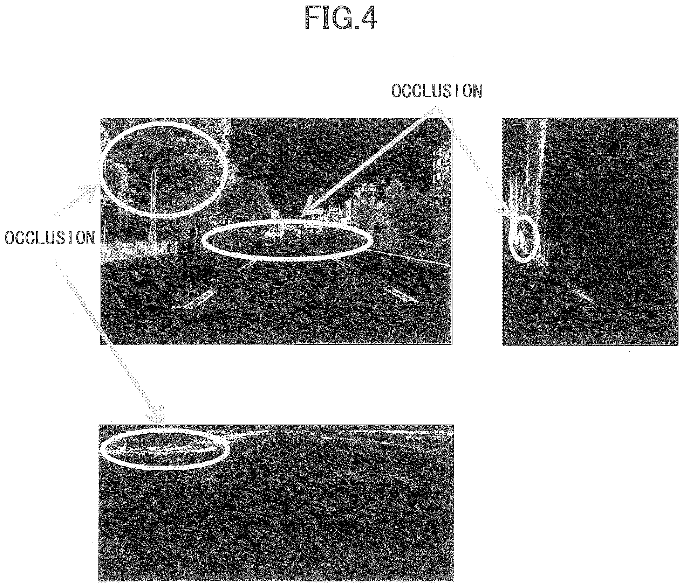

However, in the detection method on the basis of the disparity map, there is a problem that occlusion cannot be solved. Since the U-disparity image and the V-disparity image are disparity accumulation images of the corresponding disparity map in the x-axis and y-axis directions, respectively, the occlusion problem in each of the horizontal and vertical directions uniquely exists. FIG. 3 illustrates a disparity map having a fence part as well as the corresponding U-disparity and V-disparity images. FIG. 4 illustrates the occlusion of various parts with respect to the fence part in the U-disparity and V-disparity images.

Therefore, it is desired to provide a technique by which not only the problem of environmental change and geometric deformation can be solved but also the occlusion problem in the horizontal and vertical directions can be solved.

David Pfeiffer et al: "Efficient Representation of traffic scenes by means of dynamic stixels", Intelligent vehicles symposium (IV), 2010 IEEE, IEEE, Piscataway, NJ, USA, 21 June 2010 (2010-06-21), pages 217-224, XP031732275, ISBN: 978-1-4244-7866-8 proposes a medium-level stixel world representation.

Markus Enzweiler et al: "Efficient Stixel-based object recognition", Intelligent vehicles symposium (IV), 2012 IEEE, IEEE, 3 June 2012 (2012-06-03), pages 1066-1071, XP032452928, DOI: 10.1109/IVS.2012.6232137, ISBN: 978-1-46732119-8 proposes an attention mechanism to improve stereo-vision based object recognition systems.

SUMMARY OF THE INVENTION

Aspects of the invention are set out in the accompanying claims.

In Chinese Patent Application No. 20121014764.2.5 filed by the same applicant on May 11, 2012, a method is proposed of first segmenting a disparity map by adopting a section parallel to the ground surface, and then detecting a continuous road dividing object, for example, a fence on the basis of a U-disparity image of this kind of section.

In this patent application, since it is necessary to obtain the section, the detection of an object in a road scene relies on the information of the road surface. As a result, if the information of the road surface is not accurate, then the follow-on detection will be influenced dramatically.

In the light of the above circumstances, the present invention is proposed.

According to an embodiment of the present invention, a method of detecting a continuous object in a disparity direction on the basis on a disparity map is provided. The method comprises a step of obtaining the disparity map including the continuous object which is continuous in the disparity direction; a step of obtaining disparity cross-sectional views corresponding to disparities or disparity ranges according to a big-to-small order of the disparities, wherein, each of the disparity cross-sectional views is a disparity map cross-sectional generated by all disparity points corresponding to a predetermined disparity or a predetermined disparity range; a step of extracting features from the disparity cross-sectional views according to a property of the continuous object to be detected; and a step of recognizing the continuous object according to a feature sequence of the disparity cross-sectional views.

The step of obtaining the disparity cross-sectional views corresponding to the disparities or the disparity ranges according to the big-to-small order of the disparities may comprise a step of obtaining the disparity cross-sectional views according to disparity gaps corresponding to an equal distance in a three-dimensional world.

In the method of detecting the continuous object, the step of recognizing the continuous object on the basis of the feature sequence of the disparity cross-sectional views may comprise a step of determining a shape similarity of corresponding features in adjacent disparity cross-sectional views as well as position continuousness of the corresponding features in the adjacent disparity cross-sectional views.

According to an example, the continuous object to be detected is at least one of a fence, a road shoulder, shrubbery, and a side wall. The step of extracting the features from the disparity cross-sectional views on the basis of the property of the continuous object to be detected comprises a step of extracting, from the disparity cross-sectional views, vertical line segments whose heights satisfy a predetermined range. The step of recognizing the continuous object to be detected on the basis of the feature sequence of the disparity cross-sectional views comprises a step of putting (mapping) the vertical line segments in the disparity cross-sectional views to another disparity map so as to obtain a line segment sequence, carrying out a straight line fit with respect to top end points of line segments in the line segment sequence, and carrying out a straight line fit with respect to bottom end points of the line segment in the line segment sequence; a step of determining whether or not a line (a first line) obtained by carrying out the straight line fit with respect to the top end points of the line segments in the line segment sequence is basically a straight line, and determining whether or not a line (a second line) obtained by carrying out the straight line fit with respect to the bottom end points of the line segments in the line segment sequence is basically a straight line; and a step of determining, if the first line is basically a straight line and the second line is basically a straight line, that the first and second lines indicate one of the fence, the road shoulder, the shrubbery, and the side wall.

According to an example, the method of detecting the continuous object further comprises a step of carrying out prediction and selection with respect to the features of the continuous object in the follow-on disparity cross-sectional views on the basis of a disparity continuousness feature after the continuous object is recognized on the basis of a predetermined number of disparity cross-sectional views.

According another embodiment of the present invention, a device for detecting a continuous object in a disparity direction on the basis of a disparity map is provided. The device comprises a disparity map obtaining part configured to obtain the disparity map including the continuous object which is continuous in the disparity direction; a disparity cross-sectional view obtaining part configured to obtain disparity cross-sectional views corresponding to disparities or disparity ranges according to a big-to-small order of the disparities, wherein, each of the disparity cross-sectional views is a disparity map cross-sectional generated by all disparity points corresponding to a predetermined disparity or a predetermined disparity range; a feature extracting part configured to extract features from the disparity cross-sectional views on the basis of a property of the continuous object to be detected; and an object recognition part configured to recognize the continuous object on the basis of a feature sequence of the disparity cross-sectional views..

Therefore, by extracting a sequence of disparity cross-sectional views as well as carrying out feature extraction and object recognition using the method and the device according to the embodiments of the present invention, it is possible to not rely on the input information of a road surface; to obtain better stability and adaptivity; to effectively utilize a feature that an object space is continuous; and to avoid wrong detection or missing detection caused by background noise when carrying out direct detection or wrong detection or missing detection caused by occlusion or noise when carrying out detection by utilizing a U-disparity image and a V-disparity image. In a word, it is possible to acquire a more ideal detection result.

BRIEF DESCRIPTION OF THE DRAWINGS

FIG. 1 illustrates an example of a grayscale image including a fence part;

FIG. 2 illustrates examples of different grayscale images on the basis of different illumination conditions, backgrounds, visual geometric deformations, etc.;

FIG. 3 illustrates a disparity map including a fence part as well as a U-disparity image and a V-disparity image corresponding to the disparity map;

FIG. 4 illustrates occlusion of various parts with respect to the fence part in the U-disparity image and the V-disparity image shown in FIG. 3;

FIG. 5 is a flowchart of a method of detecting a continuous object in a disparity direction on the basis of a disparity map according to a first embodiment of the present invention;

FIG. 6 illustrates an original disparity map (a) as well as disparity cross-sectional views (b) and (c) corresponding to the original disparity map (a);

FIG. 7 illustrates six disparity cross-sectional views obtained on the basis of a near-to-far order of distances (i.e., a big-to-small order of disparities) and vertical line segments therein respectively extracted from the six disparity cross-sectional views;

FIG. 8 illustrates an original disparity map (a), a feature sequence (b) detected in a continuous object detecting process, a result (c) predicted and filtered on the basis of feature tracking, and a detection result (d) obtained by fitting feature points corresponding to the feature sequence (b);

FIG. 9 is a block diagram of a device for detecting a continuous object in a disparity direction on the basis of a disparity map according to a second embodiment of the present invention; and

FIG. 10 is a block diagram of a hardware arrangement of a system for detecting a continuous object in a disparity direction on the basis of a disparity map.

DETAILED DESCRIPTION OF THE PREFERRED EMBODIMENTS

In order to let those people skilled in the art better understand the present invention, hereinafter the present invention will be concretely described on the basis of the drawings and various embodiments according to an order as follow:

1. Introduction of Terms and Concepts
2. First Embodiment: Method of Detecting Continuous Object in Disparity Direction
3. Second Embodiment: Device for Detecting Continuous Object in Disparity Direction
4. Hardware Arrangement of System
5. Conclusion

1. Introduction of Terms and Concepts

First, some terms involved in this specification are explained as follows.

In this specification, a "disparity cross-sectional view" refers to a disparity map cross-sectional generated by all pixel points corresponding to a predetermined disparity or a predetermined disparity range. Alternatively, the disparity cross-sectional view may be understood as a section vertical to a depth direction (i.e., a distance direction). This section may have a certain thickness. If the section does not have a thickness, then the disparity cross-sectional view is one generated by pixel points having a same disparity. If the section has a thickness expressed by a disparity range, then the disparity cross-sectional view is one generated by pixel points whose disparities are within the disparity range.

Furthermore, a "continuous object in a disparity direction" refers to an object extending in the disparity direction, for example, a fence, shrubbery, a side wall, a road shoulder, a road dividing line, etc.

Second, some concepts involved in this specification are explained as follows.

A "disparity" actually refers to an angle between two straight lines respectively connecting two ends of a base line and a point far away. In general, when observing a same target from two points having a certain distance, a direction difference is generated. At this time, an angle generated when observing the two points from the target is called as a disparity angle, and the distance between the two points is called as a base line. As a result, as long as the disparity angle and the length of the base line are given, it is possible to calculate the distance between the target and an observer.

Moreover, a "disparity map" refers to one whose size is, when an image serves as a base image, the same with the size of the base image and whose element values are disparities. The disparity map includes the distance information of a scene. The disparity map may be obtained by carrying out calculation with respect to a left image and a right image captured by, for example, a two-lens camera or with respect to a depth map obtained from a stereo view.

In addition, the coordinates of a point in a disparity map are defined as (x, y, d), wherein, x indicates an abscissa, y indicates an ordinate, and d indicates a disparity of the point (x, y).

2. First Embodiment: Method of Detecting Continuous Object in Disparity Direction

In what follows, a process of a method of detecting a continuous road dividing object is described.

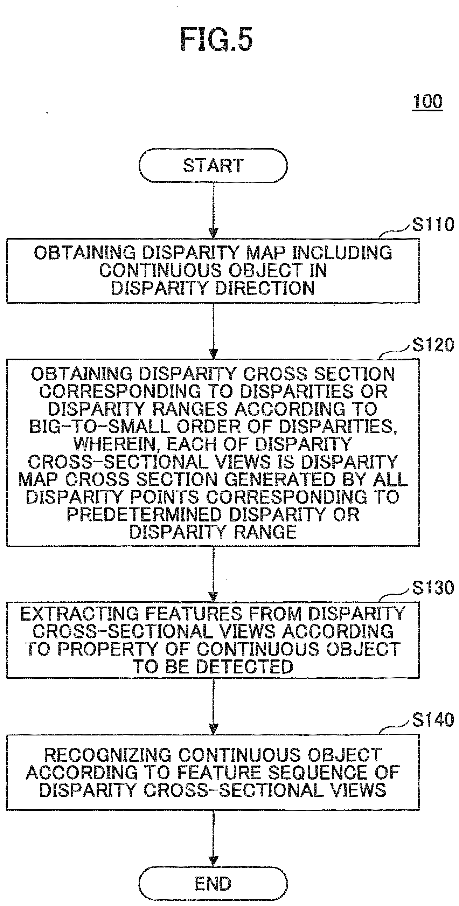

FIG. 5 illustrates a flowchart of a method 100 of detecting a continuous object in a disparity direction on the basis of a disparity map according to this embodiment of the present invention.

As shown in FIG. 5, in STEP S110, a disparity map including a continuous object is obtained, and the continuous object is continuous in the disparity direction.

Any conventional method of obtaining a disparity map may be adopted in the present invention. For example, it is possible to utilize a two lens camera, a multi lens camera, or a stereo camera to carry out photographing, and then to obtain a disparity map including a continuous road dividing object by performing calculation. In particular, for example, it is possible to capture a left image and a right image by using a two lens camera, and then to obtain a disparity map by carrying out calculation with respect to the left image and the right image. Alternatively, it is possible to acquire a depth map from a stereo view, and then to obtain a disparity map on the basis of the depth map.

In STEP S120, disparity cross-sectional views corresponding to disparities or disparity ranges are obtained according to a big-to-small order of the disparities.

As described above, a disparity cross-sectional view is a disparity map cross-sectional generated by all disparity points corresponding to a predetermined disparity or a predetermined disparity range. In general, a disparity cross-sectional view may be considered as a near-to-far cross-sectional view, and is a disparity map cross-sectional generated by all disparity points corresponding to a predetermined disparity or a disparity map cross-sectional generated by all disparity points within a predetermined disparity range. Hereinafter, for the sake of convenience, a disparity cross-sectional view includes a disparity map cross-sectional having a certain thickness. In other words, regardless of whether or not a section has a thickness, the section is called as a "disparity cross-sectional view" or a "disparity map cross-sectional".

Hereinafter, for the sake of convenience, a disparity cross-sectional view is considered as being vertical to the ground surface. Here it should be noted that, for example, if the optical axis of a stereo camera carrying out photographing is not parallel to the ground surface, then the obtained disparity cross-sectional view is not vertical to the ground surface. However, the present invention may also be applied to this kind of circumstance.

According to an example, a sequence of disparity cross-sectional views may be generated by scanning an original disparity map and selecting respective disparities according to a big-to-small order of the disparities. Here it is preferred that a big-to-small order of disparities be adopted for carrying out extraction of the respective disparity cross-sectional views and the below described extraction of features of the respective disparity cross-sectional views. The reason is that according to the following equation (1), a disparity and a distance are inversely proportional. According to a big-to-small order of disparities, i.e., a near-to-far order of distances from a stereo camera, the nearer a disparity cross-sectional view is, the more accurate and the richer its image information is. As a result, a disparity cross-sectional view near the stereo camera is more suitable to serve as a start for carrying out the detection. In addition, extracting and processing disparity cross-sectional views according to the near-to-far order of distances from the stereo camera is suitable to carry out the below described prediction and tracking of the features in disparity cross-sectional views far away.

$$d = b*f/z \quad (1)$$

Here d refers to a disparity, b refers to a distance between centers of two lenses of a stereo camera, f refers to a focal length, and z refers to a distance from the stereo camera, wherein, b and f are fixed values which are defined by the stereo camera itself.

By the way, according to the above equation (1), it is further understood that in a case where the optical axis of a stereo camera is parallel to the ground surface, a sequence of disparity cross-sectional views corresponds to a sequence of cross-sectional views vertical to the ground surface in a three-dimensional world.

According to an example, a disparity cross-sectional view generated by all points whose disparities are within a predetermined disparity range is utilized for replacing a disparity cross-sectional view generated by all points whose disparities correspond to a predetermined disparity, so as to reduce noise interference and improve calculation efficiency.

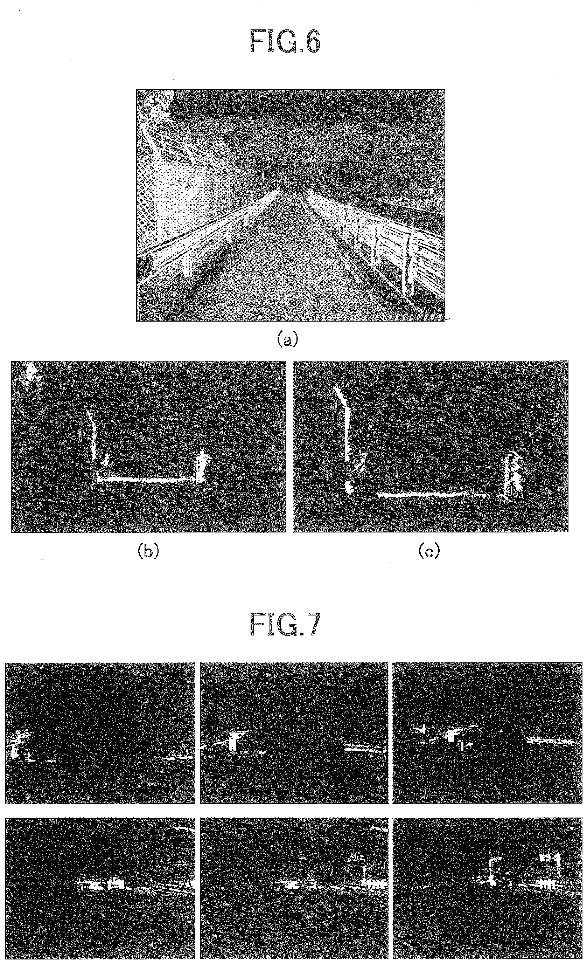

FIG. 6 illustrates an original disparity map and its corresponding disparity cross-sectional views according to this embodiment of the present invention. In FIG. 6, (a) indicates the original disparity map, and (b) and (c) indicate two disparity cross-sectional views located in different distance ranges. Here it should be noted that in the original disparity map (a) in FIG.6, the disparities are expressed by changes from black to white. In FIG. 6, (b) and (c) refer to two disparity cross-sectional views generated by points whose disparities corresponds to two different disparity ranges, respectively. In particular, (b) and (c) in FIG. 6 are two disparity cross-sectional views generated by points whose disparities are within 397 - 401 (a 16x pixel distance) and 577 - 581, respectively, and points corresponding to five disparities are included in the disparity cross-sectional views. In the example shown in FIG. 6, the disparity cross-sectional views are distance cross-sectional views vertical to the ground surface, and include cross-sectional feature information of the continuous object.

Furthermore, according to an example, in order to improve calculation efficiency, it is possible to adopt down-sampling so as to reduce calculation amount. For example, it is possible to acquire one disparity cross-sectional every 20 disparities or another value, and then to discretely make up a sequence of disparity cross-sectional views. Additionally, a range of disparities (or a thicknesses of a section) and a gap of two ranges of disparities (a gap of two sections) may not be fixed, i.e., may be variable, and the related values may be manually set on the basis of actual use or may be automatically determined by carry out learning (training).

Moreover, according to an example, it is possible to acquire the disparity cross-sectional views according to disparity gaps corresponding to an equal distance (i.e., a same distance) in a three-dimensional world.

In particular, on the basis of the equation (1), it is possible to acquire disparity cross-sectional views according to, for example, an equal distance 100 cm (i.e., z = 100) such as 100 cm - 200 cm, 200 cm - 300 cm, etc. corresponding to disparity gaps such as bf/100 - bf/200, bf/200 - bf/300, etc. By acquiring the disparity cross-sectional views according to disparity gaps corresponding to an equal distance in a three-dimensional world, it is possible to further ensure the periodic characteristic of the below described feature sequence so as to carry out more accurate object detection.

In STEP S130, on the basis of a property of the continuous object to be detected, features are extracted from the disparity cross-sectional views.

In general, the properties of different objects expressing on a disparity cross-sectional view vary.

For example, as for a continuous object on a roadside such as a fence, shrubbery, a side wall, a road shoulder, etc., they have a common feature as follows. There is a small vertical side (i.e., a small vertical line segment) located on the two roadsides, respectively, and this kind of small vertical side has a feature that in adjacent disparity cross-sectional views having different depths, its heights and positions are basically continuous. In other words, in adjacent disparity cross-sectional views, a change of a small vertical side with respect to its position or size is very small; that is to say, it is continuous in a near-to-far direction of distance. Again, for example, as for a road shoulder, its feature is similar to that of the fence; however, its height is relatively small, and is a fixed one in general. Still again, for example, a road dividing line is also a continuous object in a distance direction in a road scene. The feature of the road dividing line in a disparity cross-sectional view does not have a height. The road dividing line is just located on the road surface, has a certain fixed width in a right-to-left direction, and is continuous in a near-to-far direction of distance.

In general, a continuous object in a distance direction in a road scene is a kind of object repeated periodically in the distance direction. As a result, the feature of this kind of object in a disparity cross-sectional view may also express this kind of periodicity. Additionally, since occlusion in the original disparity map is removed, it is more suitable to utilize the features in a sequence of disparity cross-sectional views to carry out recognition.

Here it should be noted that as for these kinds of continuous objects in a distance direction, some also have a feature that gaps are continuous. For example, a dotted line-like road dividing line or some special fences have this kind of feature. However, they still express a periodically repeated feature in a distance direction. As a result, it is also possible to employ the method on the basis of disparity cross-sectional views to carry out detection.

In comparison, as for a vehicle, a passerby, a building on a roadside, or other individual objects in a road scene, since a position space each of them occupies in a near-to-far direction is less than that a continuous object on the road occupies in the same direction, its continuousness in the distance direction is not strong. However, in one or few adjacent disparity cross-sectional views, there is a big-area outline feature; as a result, it is possible to realize recognition by adopting some conventional basic object features. For example, the outline feature of a vehicle is a symmetric rectangle, the outline feature of a passerby is a strip having a certain width-to-height ratio, and the outline feature of a building is a kind of rectangle or half-rectangle frame. However, all these kinds of individual objects may be decided by carrying out determination of position and logic relationship on the basis of the recognition result of the above mentioned road scene. As a result, as for this kind of detection of non-continuous objects in a distance direction, it is possible to utilize the method of carrying out detection by extracting a feature sequence on the basis of a disparity cross-sectional view sequence according to this embodiment of the present invention.

Here it should be noted that as for the above mentioned height, if speaking ideally, it refers to a height relative to the road surface. However, as described above, the technique on the basis of a disparity cross-sectional view sequence according to this embodiment is not up to (dependent on) the information of the road surface, and in this embodiment, actually there is no height information of the road surface or height information of the object with respect to the road surface. The height of the object is estimated on the basis of, for example, the length of a line segment in a disparity map.

The features extracted from disparity cross-sectional views may include at least one of the following, namely, a line segment and point.

As an example, in what follows, the detection of a fence is given as an example for illustrating the method of detecting a continuous object on the basis of a sequence of disparity cross-sectional views according to this embodiment of the present invention. However, this kind of method may also be applied to the detection of another continuous object in a similar manner.

In particular, as for the detection of a fence, a small vertical side (i.e., a small vertical line segment) is extracted to serve as a main feature of the fence.

FIG. 7 illustrates six disparity cross-sectional views obtained on the basis of a near-to-far order of distances (i.e., a big-to-small order of disparities) as well as small vertical sides therein extracted from them according to this embodiment of the present invention.

As shown in FIG. 7, in each of the disparity cross-sectional views, a small vertical side is detected and extracted. Since there is an inverse proportional relationship between a disparity and a distance, and an image size and a distance are inversely proportional on the basis of the imaging principle at the same time, the following equation may be obtained.

$$d/B = f/Z = h/Y \quad (2)$$

Here, d refers to a disparity; B refers to a distance between centers of two lenses of a stereo camera; f refers to a focal length; Z refers to a distance of an object from the center of the stereo camera; and h refers to a height or a width of the object in an image captured by the stereo camera (more exactly, in an internal film or CCD of the stereo camera). As a result, since the actual size of the object is fixed, the height h of a vertical side indicating a fence and the disparity d are proportional. For example, in a three-dimensional world, the height of a fence is usually 900 mm±50 mm. Therefore, the range of the height of a vertical side indicating a fence in a disparity map may be calculated by using the above equation (2), i.e., h = (d*850)/B, d*950/B). In this way, it is possible to choose, on the basis of the range of the height of the vertical side, a small vertical side for indicating the feature of the fence.

Of course, in a case where a road shoulder is recognized, a height range of a vertical side indicating the road shoulder in a disparity cross-sectional view is different from the above. Also, in a case where, for example, a road dividing line is recognized, a horizontal line segment within a corresponding height range in a disparity cross-sectional view should be selected.

In STEP S140, the continuous object is recognized on the basis of a feature sequence of the respective disparity cross-sectional views.

According to an example, it is possible to recognize the continuous object on the basis of the feature sequence of the respective disparity cross-sectional views according to some predetermined rules. For example, a rule is such that first the shape similarity of corresponding features in two adjacent disparity cross-sectional views and the difference of the positions of the corresponding features in the two adjacent disparity cross-sectional views are decided, and then it is determined whether or not the difference is less than a predetermined threshold value (or whether or not the similarity is greater than a predetermined threshold value).

The aim of the above process is to determine whether or not a feature periodically occurs in different disparity cross-sectional views. In particular, an example is given as follows. In order to estimate the similarity of a feature A in a disparity cross-sectional view 1 and a feature B in a disparity cross-sectional view 2, the feature A in the disparity cross-sectional view 1 is converted into the disparity cross-sectional view 2 so that a feature A' is obtained. For example, in a case where fence recognition is taken as an example, it is supposed that there is a small vertical side A whose corresponding disparity is 100 in the disparity cross-sectional view 1, and there is a small vertical side B whose disparity is 200 in the disparity cross-sectional view 2. The height $h_A$ of the small vertical side A in the disparity cross-sectional view 1 divided by 2 is $h_A' = h_A/2$ which is the converted height in the disparity cross-sectional view 2. Then, by carrying out calculation of $|h_A' - h_B|/h_B$, it is possible to calculate the difference between the two. Similarly, it is also possible to estimate the position difference of the two features by performing conversion.

As for the fence recognition, another rule is such that it is determined whether or not, in a disparity cross-sectional view, there are two small vertical sides located on the two sides and being approximately symmetrical with respect to the image. The reason is that in a three-dimensional world, a fence is usually provided on each of two sides of a road surface in a manner of being symmetrical with respect to the road surface.

According to this embodiment it is possible to recognize the continuous object on the basis of a feature sequence by carrying out a straight line fit or a curve line fit with respect to the features.

For example, as for fence recognition, in a disparity map, a connected line of the top ends is similar to a straight line, and a connected line of the bottom ends is similar to a straight line too.

For this reason, it is possible to choose the top end points of the small vertical sides obtained before, and to put (map) these kinds of end points to an image, for example, the original disparity map (here it should be noted that all other pixel points in the original disparity map are removed; in fact, it is another disparity map). Then, by utilizing a straight line extraction method such as the Hough transform or the least squares method to detect a straight line in the image, it is determined whether or not there is a straight line (a first line) covering most top end points. Similarly, it is possible to choose the bottom end points of the small vertical sides obtained before, and to put (map) these kinds of end points on the above image, for example, the original disparity map (i.e., the above other disparity map). Then by utilizing a straight line extraction method such as the Hough transform or the least squares method to detect a straight line in the image, it is determined whether or not there is a straight line (a second line) covering most bottom end points. If it is determined that there are these kinds of straight lines, then the detected two straight lines (the first line and the second line) indicate a fence. In this way, the position of the fence may be determined and output. At the same time, for example, a message "There is a fence located 20 cm away on the left side, so please do not approach." may be provided to a driver in any proper manner, for example, by voice or a sign.

For example, after a fence is detected on the basis of a predetermined number of disparity cross-sectional views, it is possible to utilize this kind of detection result to carry out prediction as well as tracking or selection with respect to the fence features in the follow-on disparity cross-sectional views. As for the tracking method, it may be any proper conventional method, for example, a simple model of an average value method or a difference value method.

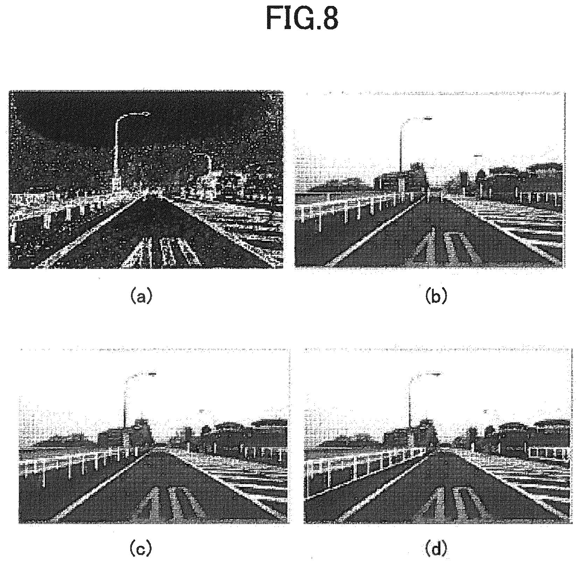

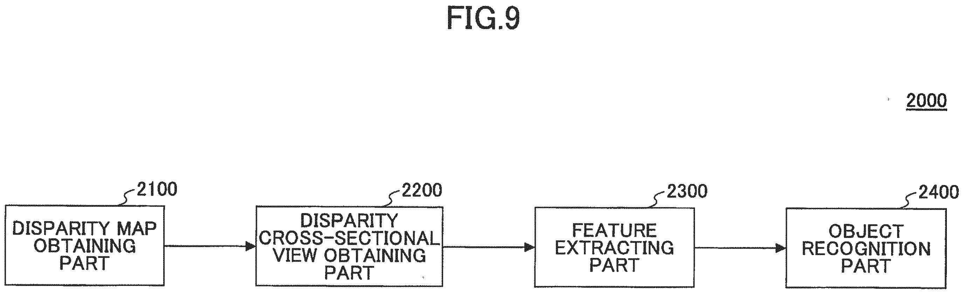

In order to better explain the concept of tracking, FIG. 7 is taken as an example where the white line segments are the fence features obtained in STEP S130 of FIG. 5. If all the features in disparity cross-sectional views having different distances are put (mapped) to an image (as described above), then the image (b) in FIG. 8 is generated. As a result, by carrying out tracking in a distance direction, it is possible to remove non-continuous isolated fence features. Here it should be noted that the image (a) in FIG. 9 is an original disparity map used for comparison. As shown in the top right image in FIG. 7, two small vertical sides located almost in the center satisfy the prediction of tracking, and then are retained; however, the other two vertical sides cannot satisfy the prediction of tracking in the distance direction, and then are removed. By carrying out the tracking in the distance direction, feature points are filtered, and only those feature points satisfying requirements are retained. As shown in the image (c) in FIG. 8, compared to the image (b) therein, feature points or noise generated by a building, a vehicle, or a road surface are filtered out, so that the most of the feature points retained are the features of the fence. The image (d) in FIG. 8 indicates a detection result obtained by fitting the feature points corresponding to a feature sequence.

According to an example, after a continuous object is recognized on the basis of a predetermined number of disparity cross-sectional views, if the feature tracking with respect to the continuous object in the follow-on disparity cross-sectional views fails, for example, if there is not a feature predicted by utilizing tracking in the follow-on continuous plural disparity cross-sectional views, then that means the accuracy of the prior recognition is not high. As a result, the prior detection result is discarded, and the features in new disparity cross-sectional views and the features in the prior disparity cross-sectional views are combined so as to carry out new detection.

Alternatively, in the prior detection, for example, in a case where a fence is taken as an example, if plural candidate straight lines are obtained by carrying out the Hough transform or the least squares method, then a degree of confidence is given to each of the plural candidate straight lines. After that, the degree of confidence of a selected straight line is verified or updated on the basis of the follow-on tracking result. If it is found that the selected straight line is not very good for tracking the fence features in the follow-on disparity cross-sectional views, then it is possible to discard the selected straight line, and to select another one from the plural candidate straight lines for expressing the fence.

Alternatively, if the feature tracking with respect to the follow-on disparity cross-sectional views by utilizing the prior detected result fails, then that may also mean the road circumstance is changed, for example, from a straight road to a curved road. At this time, it is possible to consider changing the fit model with respect to the fence end points, for example, from a straight line fit model to a quadratic curve fit model for fitting the fence end points.

Up to here, the fence detection is taken as an example for illustrating the method of detecting a continuous object on the basis of a sequence of disparity cross-sectional views according to this embodiment of the present invention. However, this is only an example, and the present invention is not limited to this example. As describe above, it is also possible to apply this method to the detection of a continuous object in a distance direction such as a road shoulder, a rode dividing line, shrubbery, a wall, etc. Of course, the present invention may also be applied to the detection of a continuous object in a non-distance direction such as a vehicle, a passerby, a building, a road sign, etc. However, the present invention is more suitable to carry out the detection of a continuous object in a distance direction.

Therefore, by extracting a sequence of disparity cross-sectional views as well as carrying out feature extraction and object recognition using the method according to this embodiment of the present invention, it is possible to not rely on the input result of a road surface; to obtain better stability and adaptivity; to effectively utilize a feature that an object space is continuous; and to avoid wrong detection or missing detection caused by background noise when carrying out direct detection or wrong detection or missing detection caused by occlusion or noise when carrying out detection by utilizing a U-V-disparity map. In a word, it is possible to acquire a more ideal detection result.

3. Second Embodiment: Device for Detecting Continuous Object in Disparity Direction

FIG. 9 illustrates a block diagram of a device 2000 for detecting a continuous object in a disparity direction on the basis of a disparity map according the second embodiment of the present invention.

As shown in FIG. 9, the device 2000 for detecting a continuous object in a disparity direction includes a disparity map obtaining part 2100 configured to obtain a disparity map having the continuous object which is continuous in the disparity direction; a disparity cross-sectional view obtaining part 2200 configured to obtain disparity cross-sectional views corresponding to disparities or disparity ranges according to a big-to-small order of the disparities, wherein, each of the disparity cross-sectional views is a disparity map cross-sectional generated by all disparity points corresponding to a predetermined disparity or a predetermined disparity range; a feature extracting part 2300 configured to extract features from the disparity cross-sectional views on the basis of the property of the continuous object to be detected;

and an object recognition part 2400 configured to recognize the continuous object on the basis of a feature sequence of the respective disparity cross-sectional views.

Here it should be noted that regarding the above-described respective parts, namely, the disparity map obtaining part 2100, the disparity cross-sectional view obtaining part 2200, the feature extracting part 2300, and object recognition part 2400, the processes of them may be understood by referring to the above descriptions of the respective steps of the flowchart shown in FIG. 5. As a result, the processes of the respective parts are omitted here.

4. Hardware Arrangement of System

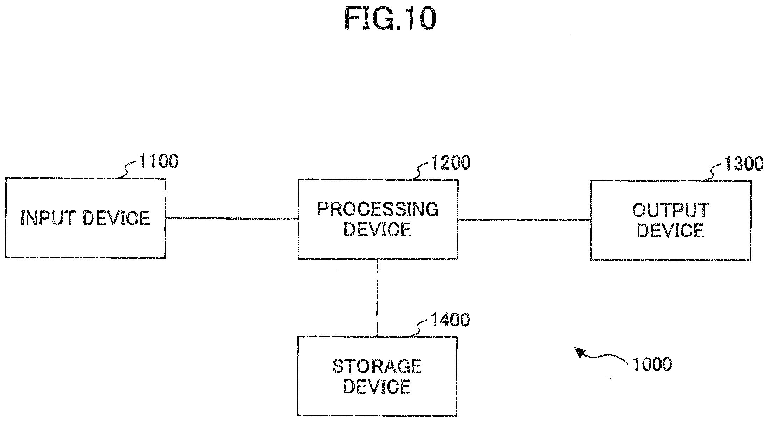

The present invention may also be implemented by utilizing a system for detecting a continuous object. FIG. 10 is a block diagram of a system 1000 for detecting a continuous object in a disparity direction on the basis of a disparity map according to an embodiment of the present invention.

As shown in FIG. 10, the system 1000 for detecting a continuous object may include an input device 1100 configured to input an image or information from outside, for example, to input a left image and a right image or depth information acquired by a stereo camera or a disparity map of a continuous road dividing object, and to possibly include a key board, a mouse, a communications network, a remote input device connected to the communication network, etc.; a processing device 1200 configured to implement the above-described method of detecting a continuous object in a disparity direction on the basis of a disparity map according to the first embodiment of the present invention, or to be implemented as the above-described device for detecting a continuous object in a disparity direction on the basis of a disparity map according to the second embodiment of the present invention, for example, to possibly include a CPU (a central processing unit) of a computer, a chip capable to perform processing, etc., and to be able to be connected to a network (not shown in the drawing) such as the Internet so as to remotely transmit a processed image on the basis of requirements of the detection process; an output device 1300 configured to output results obtained by carrying out the detection of the continuous road dividing object in the disparity direction to outside, for example, to possibly include a display unit, a printer, a communications network, a remote output device connected to the communications network, etc.; and a storage device 1400 configured to store images, disparity maps, disparity cross-sectional views, features, etc. involved in the detection process of the continuous road dividing object in the disparity direction in a volatile or non volatile manner, for example, to possibly include various volatile or nonvolatile memories such as a RAM (a random access memory), a ROM (a read only memory), a hard disk, a semiconductor memory, etc.

5. Conclusion

According to the first embodiment of the present invention, a method of detecting a continuous object in a disparity direction on the basis of a disparity map is provided. This method comprises a step of obtaining the disparity map including the continuous object which is continuous in the disparity direction; a step of obtaining disparity cross-sectional views corresponding to disparities or disparity ranges according to a big-to-small order of the disparities, wherein, each of the disparity cross-sectional views is a disparity map cross-sectional generated by all disparity points corresponding to a predetermined disparity or a predetermined disparity range; a step of extracting features from the disparity cross-sectional views on the basis of a property of the continuous object to be detected; and a step of recognizing the continuous object on the basis of a feature sequence of the disparity cross-sectional views.

The step of obtaining the disparity cross-sectional views corresponding to the disparities or the disparity ranges according to the big-to-small order of the disparities includes a step of obtaining the disparity cross-sectional views according to disparity gaps corresponding to an equal distance in a three-dimensional world.

In the method of detecting the continuous object, the step of recognizing the continuous object on the basis of the feature sequence of the disparity cross-sectional views includes a step of determining a shape similarity of two corresponding features in two adjacent disparity cross-sectional views and a position continuousness of the two corresponding features in the two adjacent disparity cross-sectional views.

According to an example, the continuous object to be detected is at least one of a fence, a road shoulder, shrubbery, and a side wall. The step of extracting the features from the disparity cross-sectional views on the basis of the property of the continuous object to be detected includes a step of extracting, from the disparity cross-sectional views, vertical line segments whose heights satisfy a predetermined range. The step of recognizing the continuous object to be detected on the basis of the feature sequence of the disparity cross-sectional views includes a step of putting (mapping) the vertical line segments in the disparity cross-sectional views to another disparity map so as to obtain a line segment sequence, carrying out a straight line fit with respect to top end points of line segments in the line segment sequence, and carrying out a straight line fit with respect to bottom end points of the line segments in the line segment sequence; a step of determining whether or not a first line obtained by carrying out the straight line fit with respect to the top end points of the line segments in the line segment sequence is basically a straight line, and determining whether or not a second line obtained by carrying out the straight line fit with respect to the bottom end points of the line segments in the line segment sequence is basically a straight line; and a step of determining, if the first line is basically a straight line and the second line is basically a straight line, that the two lines indicate one of the fence, the road shoulder, the shrubbery, and the side wall.

According to an example, the method of detecting the continuous object further comprises a step of carrying out prediction and selection with respect to the features of the continuous object in the follow-on disparity cross-sectional views on the basis of a disparity continuousness feature after the continuous object is recognized on the basis of a predetermined number of disparity cross-sectional views.

According the second embodiment of the present invention, a device for detecting a continuous object in a disparity direction on the basis of a disparity map is provided. This device comprises a disparity map obtaining part configured to obtain the disparity map including the continuous object which is continuous in the disparity direction; a disparity cross-sectional view obtaining part configured to obtain disparity cross-sectional views corresponding to disparities or disparity ranges according to a big-to-small order of the disparities, wherein, each of the disparity cross-sectional views is a disparity map cross-sectional generated by all disparity points corresponding to a predetermined disparity or a predetermined disparity range; a feature extracting part configured to extract features from the disparity cross-sectional views on the basis of a property of the continuous object to be detected; and an object recognition part configured to recognize the continuous object on the basis of a feature sequence of the disparity cross-sectional views.

Therefore, by extracting a sequence of disparity cross-sectional views as well as carrying out feature extraction and object recognition using the method and device according to the embodiments of the present invention, it is possible to not rely on the input result of a road surface; to obtain better stability and adaptivity; to effectively utilize a feature that an object space is continuous; and to avoid wrong detection or missing detection caused by background noise when carrying out direct detection or wrong detection or missing detection caused by occlusion or noise when carrying out detection by utilizing a U-disparity image and a V-disparity image. In a word, it is possible to acquire a more ideal detection result.

Here it should be noted that in the above embodiments, a fence is taken as an example for illustrating the technique of the present invention; however, the present invention is not limited to this example. For example, the present invention may also be applied to detection of any continuous road dividing object in a disparity direction such as shrubbery, a road shoulder, a road dividing line, etc. Furthermore, actually, the present invention is not limited to be applied to detection of a continuous road dividing object in a disparity direction, but may be applied to detection of any object. However, the present invention is more suitable to be applied to detection of any object whose repeated sections in a disparity direction have similarities.

In addition, in the above embodiments, a case where a disparity cross-sectional view is vertical to the ground surface is taken as an example for illustration. However, as described above, this example is just for the sake of convenience. Actually, in a case where the optical axis of a stereo camera is not parallel to the ground surface, the obtained disparity cross-sectional view is not vertical to the ground surface. In this kind of case, it is also possible to utilize the present invention.

Moreover, the embodiments of the present invention may be implemented in any convenient form, for example, using dedicated hardware, or a mixture of dedicated hardware and software. The embodiments of the present invention may be implemented as computer software implemented by one or more networked processing apparatuses. The network may comprise any conventional terrestrial or wireless communications network, such as the Internet. The processing apparatuses may comprise any suitably programmed apparatuses such as a general purpose computer, personal digital assistant, mobile telephone (such as a WAP or 3G-compliant phone) and so on. Since the embodiments of the present invention can be implemented as software, each and every aspect of the present invention thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

**Claims**

1. A method of detecting an object on a road side, the method comprising:

    a step of obtaining (S110) a disparity map of a scene containing the object;

a step of obtaining (S120) a sequence of disparity cross-sectional views corresponding to disparities or disparity ranges according to a big-to-small order of the disparities, wherein, each of the disparity cross-sectional views is a disparity map cross-sectional generated by all disparity points corresponding to a predetermined disparity or a predetermined disparity range; a step of extracting (S130) from the disparity cross-sectional views vertical line segments whose heights satisfy a predetermined range; and a step of recognizing (S140) the object comprising:

mapping the top end points and the bottom end points of the extracted vertical line segments to an image, carrying out a straight line fit with respect to the top end points to determine the presence of a first straight line covering most of the top end points in the image, and carrying out a straight line fit with respect to the bottom end points to determine the presence of a second straight line covering most of the bottom end points in the image, and indicating the presence of the object if said two straight lines are determined to be present,

wherein the object appears in the sequence of disparity cross-sectional views as a plurality of vertical line segments whose change in position and height in adjacent disparity cross-sectional views is below a predetermined threshold.

2. The method according to claim 1, wherein: the step of obtaining (S120) the sequence of disparity cross-sectional views corresponding to the disparities or the disparity ranges according to the big-to-small order of the disparities comprises a step of obtaining disparity cross-sectional views corresponding to respective portions of a three-dimensional world spaced apart by an equal distance in a three-dimensional world.

3. The method according to claim 1, wherein: the step of extracting (S130) the vertical line segments from the disparity cross-sectional views comprises a step of determining, based on a characteristic that a disparity and an actual height or an actual width of an object are proportional, a height or a width of the object in each of the disparity cross-sectional views, and using the determined height or width to choose the predetermined threshold.

4. The method according to claim 1, wherein:

the object to be detected is at least one of a fence, a road shoulder, shrubbery, and a side wall; and the step of recognizing (S140) the object comprises a step of determining that the first and second lines indicate one of the fence, the road shoulder, the shrubbery, and the side wall.

5. The method according to claim 1 or 4, further comprising: a step of carrying out prediction and selection, after the object is recognised, based on a tracking algorithm which differentiates between objects of interest and isolated features using a trend in the respective disparity of corresponding features in a predetermined number of disparity cross-sectional views of the sequence of disparity cross-sectional views.

6. A device for detecting an object on a road side, the device comprising:

a disparity map obtaining part (2100) configured to obtain a disparity map of a scene containing the object; a disparity cross-sectional view obtaining part (2200) configured to obtain a sequence of disparity cross-sectional views corresponding to disparities or disparity ranges according to a big-to-small order of the disparities, wherein, each of the disparity cross-sectional views is a disparity map cross-sectional generated by all disparity points corresponding to a predetermined disparity or a predetermined disparity range; a feature extracting part (2300) configured to extract from the disparity cross-sectional views vertical line segments whose heights satisfy a predetermined range; and an object recognition part (2400) configured to:

map the top end points and the bottom end points of the extracted vertical line segments to an image, carry out a straight line fit with respect to the top end points to determine the presence of a first straight line covering most of the top end points in the image, and to carry out a straight line fit with respect to the bottom end points to determine the presence of a second straight line covering most of the bottom end points in the image, and indicate the presence of the object if said two straight lines are determined to be present,

wherein the object appears in the sequence of disparity cross-sectional views as a plurality of vertical line segments whose change in position and height in adjacent disparity cross-sectional views is below a predetermined threshold.

7. The device according to claim 6, wherein:
the disparity cross-sectional view obtaining part (2200) is configured to obtain the sequence of disparity cross-sectional views corresponding to respective portions of a three-dimensional world spaced apart by an equal distance in a three-dimensional world.

8. The device according to claim 6, wherein:
the feature extracting part (2300) is configured to determine, based on a characteristic that a disparity and an actual height or an actual width of an object are proportional, a height or a width of the object in each of the disparity cross-sectional views, and using the determined height or width to choose the predetermined threshold.

9. The device according to claim 6, wherein:

the object to be detected is at least one of a fence, a road shoulder, shrubbery, and a side wall; and
the object recognition part (2400) is configured to carry out
a step of determining that the first and second lines indicate one of the fence, the road shoulder, the shrubbery, and the side wall.

10. The device according to claim 6 or 9, wherein:
prediction and selection are further carried out, after the object is recognised, based on a tracking algorithm which differentiates between objects of interest and isolated features using a trend in the respective disparity of corresponding features in a predetermined number of disparity cross-sectional views of the sequence of disparity cross-sectional views.

**Patentansprüche**

1. Verfahren zum Ermitteln eines Objekts an einem Straßenrand, wobei das Verfahren umfasst:

einen Schritt des Erlangens (S110) einer Verschiedenheitskarte einer Szene, die das Objekt enthält;
einen Schritt des Erlangens (S120) einer Folge von Verschiedenheitsquerschnittsansichten, die Verschiedenheiten oder Verschiedenheitsbereichen entsprechen, gemäß einer Reihenfolge der Verschiedenheiten von groß nach klein, worin jede der Verschiedenheitsquerschnittsansichten ein Verschiedenheitskartenquerschnitt ist, der durch alle Verschiedenheitspunkte erzeugt wird, die einer vorbestimmten Verschiedenheit oder einem vorbestimmten Verschiedenheitsbereich entsprechen;
einen Schritt des Extrahierens (S130) von vertikalen Liniensegmenten, deren Höhen einen vorbestimmten Bereich erfüllen, aus den Verschiedenheitsquerschnittsansichten; und
einen Schritt des Erkennens (S140) des Objekts, umfassend:

Zuordnen der oberen Endpunkte und der unteren Endpunkte der extrahierten vertikalen Liniensegmente zu einem Bild,
Durchführen einer Geradlinien-Anpassung in Bezug auf die oberen Endpunkte, um das Vorhandensein einer ersten geraden Linie zu bestimmen, welche die meisten der oberen Endpunkte im Bild abdeckt, und Durchführen einer Geradlinien-Anpassung in Bezug auf die unteren Endpunkte, um das Vorhandensein einer zweiten geraden Linie zu bestimmen, welche die meisten der unteren Endpunkte im Bild abdeckt, und
Angeben des Vorhandenseins des Objekts, wenn die beiden Geraden als vorhanden bestimmt werden,

worin das Objekt in der Folge von Verschiedenheitsquerschnittsansichten als eine Vielzahl von vertikalen Liniensegmenten erscheint, deren Positions- und Höhenänderung in benachbarten Verschiedenheitsquerschnittsansichten unterhalb eines vorbestimmten Schwellenwerts liegt.

2. Verfahren nach Anspruch 1, worin:
der Schritt des Erlangens (S120) der Folge von Verschiedenheitsquerschnittsansichten, die den Verschiedenheiten oder Verschiedenheitsbereichen entsprechen, gemäß der Reihenfolge der Verschiedenheiten von groß nach klein, einen Schritt umfasst: Erlangen von Verschiedenheitsquerschnittsansichten, die den jeweiligen Abschnitten einer dreidimensionalen Welt entsprechen, die durch einen gleichen Abstand in einer dreidimensionalen Welt beabstandet sind.

3. Verfahren nach Anspruch 1, worin:
der Schritt des Extrahierens (S130) der vertikalen Liniensegmente aus den Verschiedenheitsquerschnittsansichten einen Schritt umfasst: auf der Grundlage eines Merkmals, dass eine Verschiedenheit und eine tatsächliche Höhe oder eine tatsächliche Breite eines Objekts proportional sind, erfolgendes Bestimmen einer Höhe oder einer Breite des Objekts in jeder der Verschiedenheitsquerschnittsansichten und Verwenden der bestimmten Höhe oder Breite, um den vorbestimmten Schwellenwert zu wählen.

4. Verfahren nach Anspruch 1, worin:

das zu ermittelnde Objekt mindestens eines von Folgendem ist: ein Zaun, eine Straßenschulter, Sträucher und eine Seitenwand; und der Schritt des Erkennens (S140) des Objekts einen Schritt des Bestimmens umfasst, dass die erste und die zweite Linie eines von Folgendem anzeigen: der Zaun, die Straßenschulter, die Sträucher und die Seitenwand.

5. Verfahren nach Anspruch 1 oder 4, ferner umfassend:
einen Schritt des Durchführens von Vorhersage und Auswahl, nachdem das Objekt erkannt wurde, auf der Basis eines Verfolgungsalgorithmus, welcher unter Verwendung eines Trends in der jeweiligen Verschiedenheit entsprechender Merkmale in einer vorbestimmten Anzahl von Verschiedenheitsquerschnittsansichten der Folge von Verschiedenheitsquerschnittsansichten zwischen in Betracht kommenden Objekten und isolierten Merkmalen unterscheidet.

6. Vorrichtung zum Ermitteln eines Objekts an einem Straßenrand, wobei die Vorrichtung umfasst:

einen Verschiedenheitskartenerlangungsteil (2100), der dafür konfiguriert ist, eine Verschiedenheitskarte einer Szene, die das Objekt enthält, zu erlangen;
einen Verschiedenheitsquerschnittsansichtsgewinnungsteil (2200), der dafür konfiguriert ist, eine Folge von Verschiedenheitsquerschnittsansichten zu erlangen, die Verschiedenheiten oder Verschiedenheitsbereichen entsprechen, gemäß einer Reihenfolge der Verschiedenheiten von groß nach klein, worin jede der Verschiedenheitsquerschnittsansichten ein Verschiedenheitskartenquerschnitt ist, der durch alle Verschiedenheitspunkte erzeugt wird, die einer vorbestimmten Verschiedenheit oder einem vorbestimmten Verschiedenheitsbereich entsprechen;
einen Merkmalextraktionsteil (2300), der dafür konfiguriert ist, aus den Verschiedenheitsquerschnittsansichten vertikale Liniensegmente zu extrahieren, deren Höhen einen vorbestimmten Bereich erfüllen; und
einen Objekterkennungsteil (2400), der dafür konfiguriert ist:

die oberen Endpunkte und die unteren Endpunkte der extrahierten vertikalen Liniensegmente einem Bild zuzuordnen,
eine Geradlinien-Anpassung in Bezug auf die oberen Endpunkte durchzuführen, um das Vorhandensein einer ersten geraden Linie zu bestimmen, welche die meisten der oberen Endpunkte im Bild abdeckt, und eine Geradlinien-Anpassung in Bezug auf die unteren Endpunkte durchzuführen, um das Vorhandensein einer zweiten geraden Linie zu bestimmen, welche die meisten der unteren Endpunkte im Bild abdeckt, und
das Vorhandensein des Objekts anzugeben, wenn die beiden Geraden als vorhanden bestimmt werden,

worin das Objekt in der Folge von Verschiedenheitsquerschnittsansichten als eine Vielzahl von vertikalen Liniensegmenten erscheint, deren Positions- und Höhenänderung in benachbarten Verschiedenheitsquerschnittsansichten unterhalb eines vorbestimmten Schwellenwerts liegt.

7. Vorrichtung nach Anspruch 6, worin:
der Verschiedenheitsquerschnittsansichtsgewinnungsteil (2200) dafür konfiguriert ist, die Folge von Verschiedenheitsquerschnittsansichten zu erlangen, die den jeweiligen Abschnitten einer dreidimensionalen Welt entsprechen, die durch einen gleichen Abstand in einer dreidimensionalen Welt beabstandet sind.

8. Vorrichtung nach Anspruch 6, worin:
der Merkmalextraktionsteil (2300) dafür konfiguriert ist, auf der Grundlage eines Merkmals, dass eine Verschiedenheit und eine tatsächliche Höhe oder eine tatsächliche Breite eines Objekts proportional sind, eine Höhe oder eine Breite des Objekts in jeder der Verschiedenheitsquerschnittsansichten zu bestimmen und die bestimmte Höhe oder Breite zu verwenden, um den vorbestimmten Schwellenwert zu wählen.

9. Vorrichtung nach Anspruch 6, worin:

das zu ermittelnde Objekt mindestens eines von Folgendem ist: ein Zaun, eine Straßenschulter, Sträucher und eine Seitenwand; und
der Objekterkennungsteil (2400) dafür konfiguriert ist, einen Schritt des Bestimmens durchzuführen, dass die erste und die zweite Linie eines von Folgendem anzeigen: der Zaun, die Straßenschulter, die Sträucher und die Seitenwand.

10. Vorrichtung nach Anspruch 6 oder 9, worin:
nach dem Erkennen des Objekts ferner Vorhersage und Auswahl durchgeführt werden, und zwar auf der Grundlage eines Verfolgungsalgorithmus, der unter Verwendung eines Trends in der jeweiligen Verschiedenheit entsprechender Merkmale in einer vorbestimmten Anzahl von Verschiedenheitsquerschnittsansichten der Folge von Verschiedenheitsquerschnittsansichten zwischen in Betracht kommenden Objekten und isolierten Merkmalen unterscheidet.

## Revendications

1. Procédé de détection d'un objet sur le côté d'une route, le procédé comprenant :

   une étape d'obtention (S110) d'une carte de disparités d'une scène contenant l'objet ;
   une étape d'obtention (S120) d'une séquence de vues en coupe transversale de disparités correspondant à des disparités ou des gammes de disparité selon un ordre de disparités de grandes à petites, dans lequel chacune des vues en coupe transversale de disparités est une coupe transversale de carte de disparités générée par tous les points de disparité correspondant à une disparité prédéterminée ou à une gamme de disparités prédéterminée ;
   une étape d'extraction (S130) à partir des vues en coupe transversale de disparités, des segments de ligne verticale dont les hauteurs satisfont une gamme prédéterminée ; et
   une étape de reconnaissance (S140) de l'objet comprenant :

   la cartographie des points d'extrémité supérieurs et des points d'extrémité inférieurs des segments de ligne verticale extraits sur une image,
   la réalisation d'un ajustement de ligne droite relativement aux points d'extrémité supérieurs afin de déterminer la présence d'une première ligne droite couvrant la plupart des points d'extrémité supérieurs dans l'image, et la réalisation d'un ajustement de ligne droite relativement aux points d'extrémité inférieurs afin de déterminer la présence d'une seconde ligne droite couvrant la plupart des points d'extrémité inférieurs dans l'image et
   l'indication de la présence de l'objet si lesdites deux lignes droites sont déterminées comme étant présentes,

   dans lequel l'objet apparaît dans la séquence de vues en coupe transversale de disparités comme une pluralité de segments de ligne verticale dont le changement de position et de hauteur dans des vues en coupe transversale de disparités adjacentes est inférieur à un seuil prédéterminé.

2. Procédé selon la revendication 1, dans lequel :
   l'étape d'obtention (S120) de la séquence de vues en coupe transversale de disparités correspondant aux disparités ou aux gammes de disparité selon l'ordre de disparités de grandes à petites comprend une étape consistant à obtenir des vues en coupe transversale de disparités correspondant à des portions respectives d'un monde en trois dimensions espacées d'une distance égale dans un monde en trois dimensions.

3. Procédé selon la revendication 1, dans lequel :
   l'étape d'extraction (S130) des segments de ligne verticale depuis les vues en coupe transversale de disparités comprend une étape de détermination, basée sur une caractéristique qu'une disparité et une hauteur effective ou une largeur effective d'un objet sont proportionnels, d'une hauteur ou d'une largeur de l'objet dans chacune des vues en coupe transversale de disparités, et l'utilisation de la hauteur ou largeur déterminée afin de choisir le seuil prédéterminé.

4. Procédé selon la revendication 1, dans lequel :

   l'objet à détecter est au moins un parmi une clôture, un accotement routier, des buissons et un mur latéral ; et
   l'étape de reconnaissance (S140) de l'objet comprend une étape de détermination que la première et la seconde ligne indiquent un parmi la clôture, l'accotement routier, les buissons et le mur latéral.

5. Procédé selon la revendication 1 ou 4, comprenant en outre :
   une étape de réalisation d'une prédiction et d'une sélection, après la reconnaissance de l'objet, sur la base d'un algorithme de suivi qui différencie des objets d'intérêt et des caractéristiques isolées en utilisant une tendance dans la disparité respective de fonctions correspondantes dans un nombre prédéterminé de vues en coupe transversale de disparités de la séquence de vues en coupes transversales de disparité.

6. Dispositif de détection d'un objet sur le côté de la route, le dispositif comprenant :

   une partie d'obtention de la carte de disparités (2100) configurée afin d'obtenir une carte de disparités d'une scène contenant l'objet ;
   une partie d'obtention d'une vue en coupe transversale de disparités (2200) configurée afin d'obtenir une séquence de vues en coupe transversale de disparités correspondant à des disparités ou à des gammes de disparité selon un ordre de disparités de grandes à petites, dans lequel chacune des vues en coupe transversale de disparités est une coupe transversale de carte de disparités générée par tous les points de disparité correspondant à une disparité prédéterminée ou à une gamme de disparité prédéterminée ;

une partie d'extraction de caractéristiques (2300) configurée afin d'extraire, à partir des vues en coupe transversale de disparités, des segments de ligne verticale dont les hauteurs satisfont une gamme prédéterminée ; et

une partie de reconnaissance d'objet (2400) configurée pour :

cartographier les points d'extrémité supérieurs et les points d'extrémité inférieurs des segments de ligne verticale extraits sur une image,

réaliser un ajustement de ligne droite relativement aux points d'extrémité supérieurs afin de déterminer la présence d'une première ligne droite couvrant la plupart des points d'extrémité supérieurs dans l'image et réaliser un ajustement de ligne droite relativement aux points d'extrémité inférieurs afin de déterminer la présence d'une seconde ligne droite couvrant la plupart des points d'extrémité inférieurs dans l'image et indiquer la présence de l'objet si lesdites deux lignes droites sont déterminées comme étant présentes,

dans lequel l'objet apparaît dans la séquence de vues en coupe transversale de disparités comme une pluralité de segments de ligne verticale dont le changement de position et de hauteur dans des vues en coupes transversale de disparités adjacentes est inférieur à un seuil prédéterminé.

7. Dispositif selon la revendication 6, dans lequel : la partie d'obtention d'une vue en coupe transversale de disparités (2200) est configurée afin d'obtenir la séquence de vues en coupe transversale de disparités correspondant à des portions respectives d'un monde en trois dimensions espacées d'une distance égale dans un monde en trois dimensions.

8. Dispositif selon la revendication 6, dans lequel la partie d'extraction de caractéristique (2300) est configurée afin de déterminer, sur la base d'une caractéristique qu'une disparité et une hauteur effective ou une largeur effective d'un objet sont proportionnelles, une hauteur ou une largeur de l'objet dans chacune des vues en coupe transversale de disparités, et l'utilisation de la hauteur ou largeur déterminée afin de choisir le seuil prédéterminé.

9. Dispositif selon la revendication 6, dans lequel :

l'objet à détecter est au moins un d'une clôture, un accotement routier, des buissons et un mur latéral et

la partie de reconnaissance d'objet (2400) est configurée afin de réaliser une étape de détermination que la première et la seconde ligne indiquent un parmi la clôture, l'accotement routier, les buissons et le mur latéral.

10. Dispositif selon la revendication 6 ou 9, dans lequel : une prédiction et une sélection sont en outre réalisées, après la reconnaissance de l'objet, sur la base d'un algorithme de suivi qui différencie les objets d'intérêt et les caractéristiques isolées en utilisant une tendance dans la disparité respective des caractéristiques correspondantes dans un nombre prédéterminé de vues en coupes transversale de disparités de la séquence de vues en coupe transversale de disparités.

FIG.1

# FIG.2

# FIG.3

# FIG.4

# FIG.5

<u>100</u>

```
        START
          |
          | ↓                                    ⌒S110
┌─────────────────────────────────────┐
│  OBTAINING DISPARITY MAP INCLUDING   │
│         CONTINUOUS OBJECT IN         │
│          DISPARITY DIRECTION         │
└─────────────────────────────────────┘
          |
          | ↓                                    ⌒S120
┌─────────────────────────────────────┐
│   OBTAINING DISPARITY CROSS SECTION  │
│  CORRESPONDING TO DISPARITIES OR     │
│    DISPARITY RANGES ACCORDING TO     │
│  BIG-TO-SMALL ORDER OF DISPARITIES,  │
│      WHEREIN, EACH OF DISPARITY      │
│   CROSS-SECTIONAL VIEWS IS DISPARITY │
│  MAP CROSS SECTION GENERATED BY ALL  │
│  DISPARITY POINTS CORRESPONDING TO   │
│    PREDETERMINED DISPARITY OR        │
│          DISPARITY RANGE             │
└─────────────────────────────────────┘
          |
          | ↓                                    ⌒S130
┌─────────────────────────────────────┐
│  EXTRACTING FEATURES FROM DISPARITY  │
│    CROSS-SECTIONAL VIEWS ACCORDING   │
│   TO PROPERTY OF CONTINUOUS OBJECT   │
│            TO BE DETECTED            │
└─────────────────────────────────────┘
          |
          | ↓                                    ⌒S140
┌─────────────────────────────────────┐
│   RECOGNIZING CONTINUOUS OBJECT      │
│ ACCORDING TO FEATURE SEQUENCE OF     │
│  DISPARITY CROSS-SECTIONAL VIEWS     │
└─────────────────────────────────────┘
          |
          | ↓
         END
```

# FIG.6

(a)

(b)

(c)

# FIG.7

# FIG.8

(a)

(b)

(c)

(d)

FIG.9

2000

DISPARITY MAP OBTAINING PART 2100

DISPARITY CROSS-SECTIONAL VIEW OBTAINING PART 2200

FEATURE EXTRACTING PART 2300

OBJECT RECOGNITION PART 2400

# FIG.10

EP 2 743 861 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2012101476425

### Non-patent literature cited in the description

- **GIANCARLO ALESSANDRETTI ; ALBERTO BROGGI ; PIETRO CERRI.** Vehicle and Guard Rail Detection Using Radar and Vision Data Fusion. *IEEE 2007 Transactions on Intelligent Transportation Systems,* 2007
- **ZHENCHENG HU ; FRANCISCO LAMOSA ; KEI-ICHI UCHIMURA.** A Complete U-V-Disparity Study for Stereovision Based on 3D Driving Environment Analysis. *Proceedings of the Fifth International Conference on 3D Digital Imaging and Modeling,* 2005
- Efficient Representation of traffic scenes by means of dynamic stixels. **DAVID PFEIFFER et al.** Intelligent vehicles symposium (IV), 2010 IEEE. IEEE, 21 June 2010, 217-224
- Efficient Stixel-based object recognition. **MARKUS ENZWEILER et al.** Intelligent vehicles symposium (IV), 2012 IEEE. IEEE, 03 June 2012, 1066-1071